(19) Europäisches Patentamt
European Patent Office
Office européen des brevets

(11) **EP 2 850 393 B1**

(12) **EUROPEAN PATENT SPECIFICATION**

(45) Date of publication and mention
of the grant of the patent:
**28.10.2015 Bulletin 2015/44**

(51) Int Cl.:
***G01D 3/036*** *(2006.01)*     ***G06F 1/16*** *(2006.01)*

(21) Application number: **13720216.4**

(86) International application number:
**PCT/CH2013/000064**

(22) Date of filing: **18.04.2013**

(87) International publication number:
**WO 2014/005234 (09.01.2014 Gazette 2014/02)**

(54) **METHOD FOR OPERATING A PORTABLE ELECTRONIC DEVICE**

VERFAHREN FÜR DEN BETRIEB EINER TRAGBAREN ELEKTRONISCHEN VORRICHTUNG

PROCÉDÉ DE FONCTIONNEMENT D'UN DISPOSITIF ÉLECTRONIQUE PORTABLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.07.2012 EP 12004897**

(43) Date of publication of application:
**25.03.2015 Bulletin 2015/13**

(73) Proprietor: **Sensirion AG**
**8712 Stäfa (CH)**

(72) Inventors:
• **NIEDERBERGER, Dominik**
**8055 Zürich (CH)**

• **SACCHETTI, Andrea**
**8051 Zürich (CH)**
• **DOMINIC, Böni**
**8157 Dielsdorf (CH)**

(74) Representative: **Toleti, Martin**
**c/o E.Blum & Co. AG**
**Vorderberg 11**
**8044 Zürich (CH)**

(56) References cited:
**EP-A1- 0 387 025     US-A- 5 502 838**
**US-A- 5 721 837**

**Description**

Cross References to Related Applications

This application claims the priority of European patent application 12 004 897.0, filed July 2, 2012,

Technical Field

The present invention relates to a portable electronic device, to a method for operating a portable electronic device, and to a computer program element for operating a portable electronic device.

Background Art

It is desired to conduct a precise measurement of the ambient temperature with a portable electronic device such as a mobile phone, a tablet computer or another portable computing device, which portable electronic device typically comprises an energy storage for supplying energy for operating the portable electronic device.

Document US5721837 discloses a digital electronic device with a temperature protection element, this element checking the temperature of the different components of the microcircuit and when detecting a rise in temperature in one or more of them, lowering the clock frequency of those components whose temperature is high, in order to limit the temperature rise of the component.

Disclosure of the Invention

According to first aspects of the present invention methods are provided for operating a portable electronic device.

According to second aspects of the present invention, portable electronic devices are provided.

The portable electronic device comprises a temperature sensor for sensing an ambient temperature of the portable electronic device which temperature sensor typically provides a sufficient coupling to the environment of the portable electronic device, e.g. by being exposed to the ambient through openings in a housing of the device or other means.

However, it was found that heat radiated from an energy storage of the portable electronic device during a recharge process thereof, may impact the measurement of the ambient temperature. This may result in that the temperature sensed by the temperature sensor no longer reflects the real ambient temperature but reflects the real ambient temperature perturbed by heat released during recharging the energy storage, and even after the recharge process has been terminated in view of the heat dissipating slowly. Hence, the present portable electronic device comprises a compensator for compensating for such perturbance and for determining a compensated ambient temperature which preferably better reflects the real ambient temperature. This compensated ambient temperature represents an estimate of the real ambient temperature based on the sensed ambient temperature as supplied by the temperature sensor and by taking into account the heat generated during recharging the energy storage by means of information related to a charging current, or, alternatively or in addition by a temperature of the energy storage sensed by another temperature sensor. Such other temperature sensor preferably is arranged at or close to the energy storage in case the temperature of the energy storage shall be sensed and contribute to the compenastion. As a result, the sensed ambient temperature preferably may be corrected by a temperature value owed to the heat transferred from the energy storage to the temperature sensor during recharging.

The rechargeable energy storage of the portable electronic device may, for example, be a rechargeable battery which supplies energy consuming components of the portable electronic device with electrical energy. Preferably by means of a recharging detector it can be detected if the energy storage is in a process of being recharged. Such recharging detector may in one embodiment include a mechanical recharging detector for detecting if a socket of the portable electronic device is connected to a charging cable. Whenever a charging cable is plugged into the socket the portable electronic device is thereby connected to a main supply for charging the rechargeable energy storage. This recharging detector, hence, may detect a mechanical plug. In another variant, the recharging detector may detect if current is supplied from the socket to the energy storage. In another variant, the recharging detector may monitor a capacity, or more generally a charging level of the rechargeable energy storage and derive herefrom if the energy storage currently is charged. The recharge process may be detected in case of a sufficient change in the charging level, and specifically from an upward change in the charging level. In another variant, the detector may monitor a charging voltage of the battery and derive if the energy storage currently is recharged. The recharge process may be from a change in the charging voltage and specifically from an upward change in the charging voltage. In another embodiment, the charging current itself may be measured. In case the charging current deviates from zero a current recharge process is detected.

If the energy storage is detected to be in a process of being recharged the compensated ambient temperature preferably is determined not only dependent on the sensed ambient temperature and possibly compensation parameters representing a heat impact from heat sources in the portable electronic device other than the energy storage, but also dependent on information related to a charging current for recharging the energy storage, and/or the sensed temperature of the energy storage respectively. Hence, at least once a recharge process / state is detected, and preferably its start is detected, this recharge process preferably is reflected by corresponding parameters in the compensation of the sensed temperature signal dependent on information related to the charging current and/or the sensed temperature of the energy storage respectively. Preferably, the compensation is not terminated upon the detection of a termination of the recharge process but continues in view of the heat generated throughout the recharge process requiring some time to dissipate during which time this heat still perturbs the sensing of the ambient temperature.

Preferably, the information related to the charging current represents the charging current itself. In case of no recharge process being detected, it is preferred that no recharging owed compensation is applied. Here, the ambient temperature preferably is determined solely dependent on the sensed ambient temperature and possibly compensation parameters representing a heat impact from heat sources in the portable electronic device other than the energy storage.

In a preferred embodiment, in response to the detection of the recharge process the recharge based compensation may be activated under the assumption it was not applied so far. In response to the detection of an absence of a recharge process, the recharge based compensation may be deactivated under the assumption it was active so far. In an alternative embodiment, however, the recharge based compensation may not actively be activated or deactivated but may permanently contribute to the compensation model. In this example, the ambient temperature permanently is calculated dependent on the charging current which charging current is zero or around zero in the absence of a recharge process and thus does not contribute to the compensation. Even if in this latter embodiment there may be no explicit recharge detection, the recharge detection still is implied given that the charging current is zero in the absence of a recharge process and is non-zero in the presence of a recharge process.

There may be portable electronic devices in which the charging current is not explicitly measured. Still the compensation is desired to be made dependent on the charging current given that the charging current is a measure for the heat released during the recharge process. Hence, in such situations it is preferred that the charging current is not measured but is determined subject to other information available. Such other information may, for example, be a nominal charging current value which may be supplied by a recharger. This nominal charging current value indicates a charging current that typically is provided by the recharger. In one embodiment, this nominal charging current value may be used for the compensation.

However, it is observed that the nominal charging current value may only reflect or come close to the real charging current as long as the energy storage is not fully charged. The higher a charging level of the energy storage is, the more the real charging current deviates from the nominal charging current value. Such deviation may result in an inaccurate compensation and as such in an inaccurate compensated ambient temperature value. In this scenario, a drop of the charging current may be owed to a corresponding control in the recharger which controls the charging current down dependent on the charging level or given that at already high charging levels the energy storage no longer is capable of storing load of additional energy and rather would this oversupplied electrical energy into heat which may damage the energy storage.

The charging level of the energy storage on the other hand is readily available e.g. from an operating system of the portable electronic device or from the energy storage itself. Most of todays portable electronic devices provide a charging level indicator displayed to the user in order to warn the user of a flat battery and encourage the user to recharge the device early on.

In this embodiment, therefore, the charging current typically is not measured but is preferably set to the nominal charging current value if the charging level of the energy storage is below a threshold which threshold preferably coincides with a threshold of the recharger for starting reducing the charging current. However, in case the threshold is met or exceeded by the charging level - which implies that the nominal charging current value no longer reflects the real charging current -, it is preferred that the charging current is set to a value less than the nominal charging current value.

Preferably, in this scenario the determined charging current is set to a value derived from a charging current versus charging level characteristic. Such characteristic may be stored in the device itself and initially be provided by the recharger supplier or be generated by way of measurements.

Hence, in these embodiments, the charging current is rather determined by means of related information than being directly measured. These embodiments may be modified by replacing the charging level by a charging voltage that may be measured, for example. Given that in many devices the charging level of the energy storage is derived from the charging voltage, e.g. the voltage of the battery, this measure may be taken alternatively to the charging level. Here, the charging current over charging voltage characteristic may assumed to be similar to the characteristic of the charging current over charging level. I.e., the charging current is assumed to be constant for low charging voltages and drops for higher charging voltages.

If, however, according to another embodiment, the charging current is directly measured, the measured charging current may be used as information impacting the compensation of the sensed ambient temperature.

In preferred embodiments, other components representing heat sources may be considered in the compensation of the sensed temperature. Such components may include one or more of the following:

a display of the portable electronic device, wherein power consumption related information of the display may be used for the compensation;

a central processing unit of the portable electronic device, wherein power consumption related information such as a load of the central processing unit may be used for the compensation;

a GPS module of the portable electronic device, wherein power consumption related information of the GPS module may be used for the compensation.

A selection of components which contribute to the compensation may depend on the heat generated in absolute terms or in relative terms.

It is preferred that the compensated ambient temperature may also be determined based on a thermal conductivity of a heat path between the energy storage and the temperature sensor, and/or between other components contributing to the compensation and the temperature sensor if any. This measure may make the determination of the compensated ambient temperature even more precise since it takes into account the heat flux that effectively arrives at the temperature sensor rather than the bare heat that is generated at the energy storage or other component respectively.

In another embodiment, the compensated ambient temperature may additionally be determined based on a thermal capacity of one or more of thermal capacitances in the portable electronic device. Such thermal capacitance may be represented by any element of the portable electronic device being capable of storing thermal energy. For example, a housing of the portable electronic device or parts thereof may be considered as a thermal capacitance. The thermal capacitance does not necessarily consume electrical power but may be heated by components which consume electrical power. The thermal capacitance may store the supplied thermal energy over some time. Such heat may be transferred to the temperature sensor via a thermal conducting path especially when the temperature at the temperature sensor is lower than the temperature of the thermal capacitance. Preferably, it is only the major thermal capacitances that are taken into account for determining the compensated ambient temperature. Generally, it depends on the design of the portable electronic device how many other components, thermal paths or thermal capacitances are available in the portable electronic device and which of these are selected for contributing to the compensation.

In another preferred embodiment, a sensed temperature of at least one further temperature sensor, or a sensor allowing for determining a temperature, such as a thermal flux sensor, arranged in the device may be used for determining the compensated ambient temperature, especially when such temperature sensor is available in the device anyway. Such temperature sensor may include a temperature sensor that is arranged in the portable electronic device for measuring the temperature at a specific location, or the temperature of a specific component, such as, for example, a central processing unit of the device.

In a preferred embodiment, frequency contributions in the sensed ambient temperature with a frequency f>0 Hz are adjusted dependent on the sensed ambient temperature ($T_S$). This feature may be applied for accelerating the determination of the compensated ambient temperature.

Preferably, the portable electronic device may be one of a mobile phone, and especially a smart phone, a handheld computer, an electronic reader, a tablet computer, a game controller, a pointing device, a photo or a video camera, a computer peripheral, a digital music player, a wrist watch, a key fob, a head set.

According to a further aspect of the present invention, a computer program element is provided for operating a portable electronic device, which computer program element, which preferably is stored on a computer storage medium, comprises computer program code means for receiving a signal representing an ambient temperature of the portable electronic device sensed by a temperature sensor of the portable electronic device, and for receiving information if a rechargeable energy storage of the portable electronic device is in a process of being recharged. If the energy storage is detected to be in a process of being recharged a compensated ambient temperature is determined dependent on at least the sensed ambient temperature and dependent on information related to a charging current for recharging the energy storage.

According to a further aspect of the present invention, a computer program element is provided for operating a portable electronic device, which computer program element, which preferably is stored on a computer storage medium, comprises computer program code means for receiving a signal representing an ambient temperature of the portable electronic device sensed by a temperature sensor of the portable electronic device, and for receiving a signal representing a temperature of a rechargeable energy storage of the portable electronic device sensed by means of another temperature sensor. If the energy storage is detected to be in a process of being recharged a compensated ambient temperature is determined dependent on at least the sensed ambient temperature and dependent on the sensed energy storage temperature.

Generally, in any of the methods, the portable electronic devices and the computer program elements, the temperature sensor may in an alternative not be provided and/or arranged for sensing the ambient temperature but may be provided and/or arranged for sensing a temperature of a component of the device or of a location within the device. Again, heat generated by (other) components may impact such measurement. Hence, it is again preferred that a compensator is provided for determining a compensated temperature dependent on at least the sensed temperature and information related to the electrical power consumed by at least one of the (other) components.

Other advantageous embodiments are listed in the dependent claims as well as in the description below. The described embodiments similarly pertain to the device, the method, and the computer program element.

Brief Description of the Drawings

The detailed description refers to embodiments of the present invention. Such description makes reference to the annexed drawings, wherein:

Fig. 1 illustrates a mobile phone according to an embodiment of the present invention in diagram a), an associated thermal block diagram in diagram b), and an associate compensator in diagram c),
Fig. 2 shows a chart of different temperature signals over time illustrating the compensating effect according to embodiments of the present invention,
Fig. 3 shows a flow chart of a method for operating a portable electronic device according to an embodiment of the present invention, and
Fig. 4 shows a block diagram of a portable electronic device according to an embodiment of the present invention.

Detailed Description

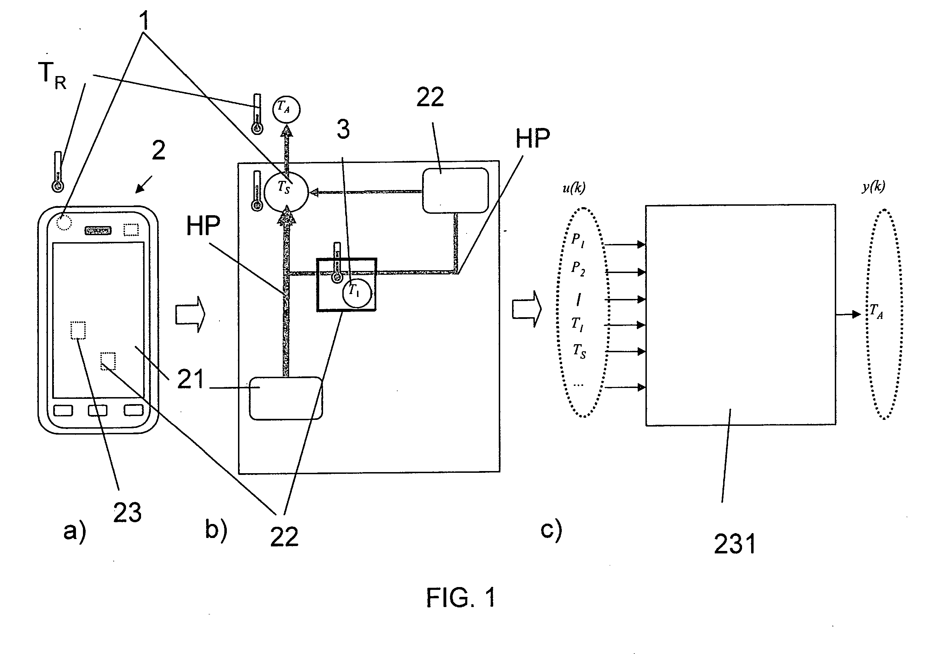

Fig. 1a) shows a diagram illustrating a mobile phone according to an embodiment of the present invention. The mobile phone includes a temperature sensor 1, an energy storage 22 and a central processing unit 23 and a display. One or more of these components 21, 22, 23 may radiate heat during operation of the mobile phone amongst other components. The temperature sensor 1, which for example may be one of a commercially available sensor from Sensirion™ AG under the tradenames SHTC1 (temperature and humidity sensor) or STS21 (as temperature only sensor), provides a sensed ambient temperature $T_S$. The sensed ambient temperature $T_S$ may not reflect the real ambient temperature $T_R$ because of a self-heating of the energy storage 22 during recharge which perturbs the measuring with the temperature sensor 1. Another reason may be a slow dynamic that slows down a temperature response of the temperature sensor 1 when the real ambient temperature $T_R$ changes quickly.

In this context, a "thermal" block diagram of the mobile phone of diagram 1a) is shown diagram 1b). The heat generating components 21, 22, 23 are thermally connected to the temperature sensor 1 and possibly to each other by heat paths HP on which heat flux is propagated.

Preferably, a heat flux propagating to the temperature sensor 1 may be determined and be compensated for by a compensator 4 as is shown in diagram 1c). The compensator 4 may be an entity, represented by hardware, software, or a combination of both, which receives at least the sensed ambient temperature $T_S$, and a determined charging current I in the case of a recharge process detected. In addition, the compensation may receive information $P_1$, $P_2$ related to the power consumption of the other components 21 and 23. The compensator 4 supplies at its output the compensated ambient temperature $T_A$.

In general, the compensator 4 may make use of a dynamic thermal model of the mobile device such as, for example, is shown in diagram 1b). The dynamic thermal model may mathematically be described by a differential equation system. The model may in one embodiment comprise one or more, and preferably the most relevant heat sources, and in another embodiment additionally one or more, and preferably the most relevant thermal conductivities, and in another embodiment additionally one or more, and preferably the most relevant heat capacities, as well as it comprises the temperature sensor that is well coupled to the ambient, and it may comprise one or more optional temperature sensors that may be available in the mobile device.

The compensated ambient temperature $T_A$ may then be estimated from these inputs by using the following Equation 1) as compensator 4:

$$x(k + 1) = Ax(k) + Bu(k)$$

$$y(k) = Cx(k) + Bu(k) \qquad \text{Collectively Equation 1)}$$

with $u(k)$ denoting the inputs at time step $k$, $y(k)$ denoting the output $T_A$, and $x(k)$ denoting an internal state vector. $A$ is an $n$-by-n matrix, $B$ an $n$-by-$m$ matrix, $C$ an $1$-by-$n$ matrix and $D$ an 1-by-$m$ matrix, where $n$ is the number of states that depends on the complexity of the model and $m$ the number of inputs. Typical inputs may be, for example, an intensity of a display, a time derivative of a battery charge level, a central processing unit load, or other power management information. Additional temperature sensors at hot spots of the portable electronic device may improve the compensation results.

Hence, in one embodiment, the portable electronic device is modelled as a thermal system with heat sources, and optionally with heat capacities and/or thermal conductivities. From this model, a time-discrete compensator according to the state space description of Equation 1) is derived, that can easily be implemented on a microprocessor of the portable electronic device by using the following software code:

```
while not stopped
{
  u=Read_Input(); // Read input
  y=C*x+D*u; // Calculate output
  x=A*x+B*u; // State Update
  TA=y; // Ambient Temperature = y
}
```

The compensated ambient temperature $T_A$ may be displayed on the display 21.

Alternatively to the measuring of information related to the power consumed by the energy storage 22, or in addition, another temperature sensor 3 may be provided which other temperature sensor 3 may act as a sensor for sensing the temperature $T_1$ of the energy storage 22. Here, the compensator 4 may determine the ambient temperature $T_A$ at least dependent on the sensed ambient temperature $T_s$ and the sensed temperature $T_1$.

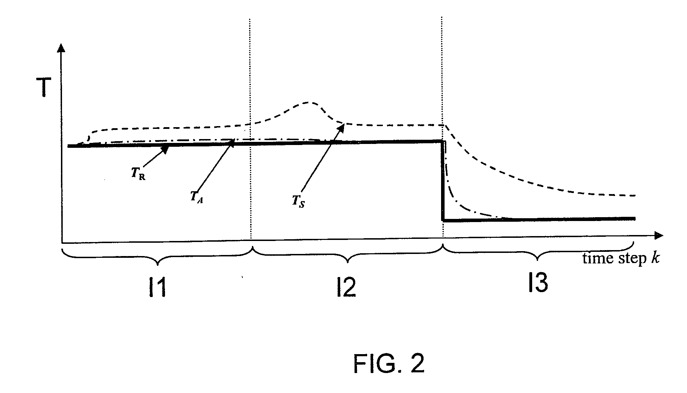

In a temperature T over time t chart according to FIG. 2, in which time t is represented by discrete time steps $k*\Delta t$, a sample real temperature characteristic $T_R$ in the ambient of a portable electronic device is shown by the straight line. The dashed line represents a corresponding ambient temperature $T_S$ as sensed by a temperature sensor of the mobile device. It becomes apparent from the chart in FIG. 2 that due to internal heating the temperature sensor detects an ambient temperature $T_S$ higher than the real ambient temperature $T_R$. Interval I1 may, for example, represent a time interval, in which the mobile device is operated at average load. However, in interval I2, it assumed that a battery of the mobile device at least temporarily is recharged. This results in the sensed ambient temperature $T_S$ even more deviating from the real ambient temperature $T_R$: At the end of interval I2, the real ambient temperature $T_R$ drops, for example, due to the user of the mobile device entering a basement. The sensed ambient temperature $T_S$ follows a temperature drop in the real ambient temperature $T_R$ only slowly. The dashed-dotted line, on the other hand, illustrates a compensated ambient temperature $T_A$ which is determined by using a compensator such as illustrated in diagram 1c), which is based on a thermal model of the portable electronic device. It can be seen, that from the beginning of the operation of the portable electronic device, a deviation of the compensated ambient temperature $T_A$ from the real ambient temperature $T_R$ is minimized, at least the compensated ambient temperature $T_A$ is lower than the sensed ambient temperature $T_S$.

In interval I3, the compensated ambient temperature $T_A$ much quicker aligns with the drop in the real ambient temperature $T_R$. This effect may be caused by implementing a temperature dependent compensation of dynamic contributions of the sensed ambient temperature $T_S$ in the compensator. A dynamic contribution is understood as any contribution in the spectral range with a frequency f>0 Hz. In case of a fast varying ambient temperature such as the step function at the end of interval I2, the compensator is enabled to accelerate the thermal dynamics of the mobile device such that the compensated ambient temperature $T_A$ responds faster to changes in the real ambient temperature $T_R$, and consequently in the sensed ambient temperature $T_S$. For such temperature dependent compensation of the dynamics of the sensed ambient temperature signal, it is referred to US Patent Publication US 2011/0307208.

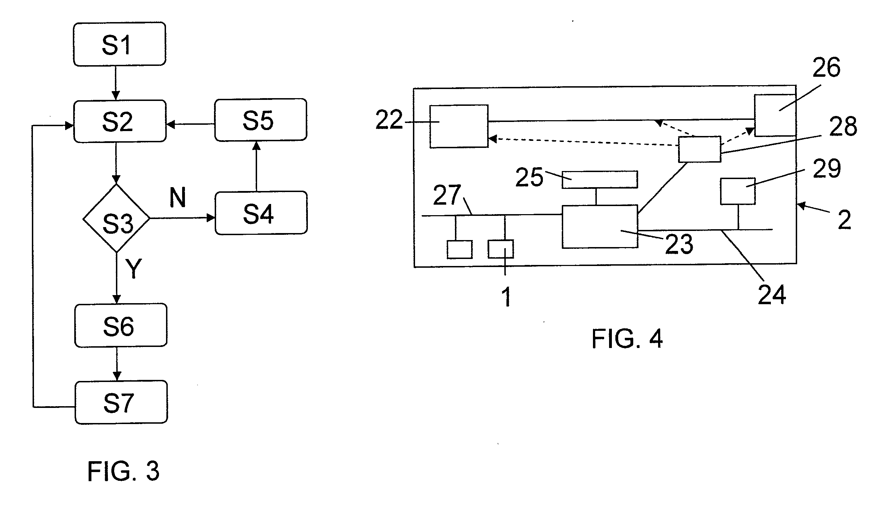

Fig. 3 illustrates a flow chart of a method for operating a portable electronic device according to an embodiment of the present invention. In step S1 the device is switched on. In step S2, an ambient temperature is measured. In step S3 it is verified if a battery of the device is in a process of being recharged. If no such recharge process is detected (N), in step S4 a compensated ambient temperature is calculated dependent on the sensed ambient temperature, and potentially compensated for heat propagated to the temperature sensor from components other than the energy storage. In step S5 the compensated ambient temperature is displayed to the user on a display of the device. If a recharge process is detected instead (Y), in step S6 a compensated ambient temperature is calculated dependent on the sensed ambient temperature and at least further dependent on a nominal charging current value and a charging level or charging voltage of the energy storage. The sensed temperature may also here additionally be compensated for heat propagated to the temperature sensor from components other than the energy storage. In step S7 the compensated ambient temperature is displayed to the user on the display.

Figure 4 shows a schematic hardware oriented block diagram of a portable electronic device 2 according to an embodiment of the present invention. Here, a central processing unit 23 in form of a microprocessor is connected via electrical conductors 27 to a temperature sensor 1 and other sensors. A wireless interface 25 is connected to the microprocessor, too. A socket 26 for receiving a charging cable is connected to a rechargeable battery 22. Whenever a charging cable is plugged into the socket 26 and the portable electronic device 2 is thereby connected to a main supply the rechargeable battery 22 will be charged. A recharging process detector 28 is provided for detecting a recharge process. As indicated by the dotted line arrows, the detector 28 may, for example, detect if a charging cable is plugged into the socket 26 and as such detect a mechanical plug. In another variant, the detector 28 may detect if current is supplied from the socket 26 to the rechargeable battery 22. In another variant, the detector 28 may monitor a capacity, or more generally a charging level of the rechargeable battery 2 and derive from this state if the rechargeable battery 2 currently is charged. Any such indicator as to the detection of a charging process is submitted to the central processing unit 23 as is the charging level of the battery 22. In addition, the charging process detector 28 may supply a nominal charging current value to the central processing unit 23 received by a recharger plugged into the socket 26. The central processing unit 23 analyzes the signals supplied by the temperature sensor 1 and the recharging process detector 78 by executing a corresponding routine. The routine which is also denoted as compensator is stored in a memory 29 connected to the central processing unit 23 via a bus system 24.

**Claims**

1. Method for operating a portable electronic device, comprising
   sensing an ambient temperature ($T_S$) of the portable electronic device (2) by means of a temperature sensor (1),
   detecting if a rechargeable energy storage (22) of the portable electronic device (2) is in a process of being recharged,
   if the energy storage (22) is detected to be in a process of being recharged determining a compensated ambient temperature ($T_A$) dependent on at least the sensed ambient temperature ($T_S$) and dependent on information ($P_i$) related to a charging current for recharging the energy storage (22).

2. Method according to claim 1
   wherein the charging current is determined subject to a charging level and / or a charging voltage of the energy storage (22), and
   wherein the compensated ambient temperature ($T_A$) is determined dependent on the determined charging current.

3. Method according to claim 2, wherein the charging current is set to a nominal charging current value if the charging level or the charging voltage respectively is less than a threshold.

4. Method according to claim 2 or claim 3,
   wherein the charging current is set to a value less than the nominal charging current value if the charging level or the charging voltage respectively is equal to or above a threshold.

5. Method according to any one of the preceding claims 2 to 4,
   wherein the charging current is set to a value derived from a charging current versus charging level characteristic or a charging current versus charging voltage characteristic respectively if the charging level is equal to or above a threshold.

6. Method according to any one of the preceding claims 3 to 5,
   wherein the nominal charging current value is received from a recharger connected to the portable electronic device (2) during a process of being recharged.

7. Method according to claim 1,
   wherein the charging current is measured, and
   wherein the compensated ambient temperature ($T_A$) is determined dependent on the measured charging current.

8. Method according to any one of the preceding claims 2 to 7,
   wherein the determination or the measuring of the charging current is only performed if the energy storage (22) is detected to be in a process of being recharged.

9. Method for operating a portable electronic device, in particular according to any of the preceding claims, comprising sensing an ambient temperature ($T_S$) of the portable electronic device (2) by means of a temperature sensor (1), sensing a temperature ($T_1$) of a rechargeable energy storage (22) of the portable electronic device (2) by means of another temperature sensor (3) detecting if the rechargeable energy storage (22) is in a process of being recharged, if the energy storage (22) is detected to be in a process of being recharged determining a compensated ambient temperature ($T_A$) dependent on at least the sensed ambient temperature ($T_S$) and dependent on the sensed energy storage temperature ($T_1$).

10. Method according to any one of the preceding claims, wherein the compensated ambient temperature ($T_A$) represents the sensed ambient temperature ($T_S$) adjusted by a temperature value representing an impact of heat released at least from the energy storage (22) during the process of being recharged and propagated via a heat path (HP) to the temperature sensor (1).

11. Method according to one of the preceding claims, wherein frequency contributions of the sensed ambient temperature ($T_S$) with a frequency f>0 Hz are adjusted dependent on the sensed ambient temperature ($T_S$).

12. Computer program element for operating a portable electronic device, comprising computer program code means for implementing the following steps when executed on a processor of a portable electronic device: receiving a signal representing an ambient temperature ($T_S$) of the portable electronic device (2) sensed by a temperature sensor (1) of the portable electronic device, receiving information if a rechargeable energy storage (22) of the portable electronic device (2) is in a process of being recharged, if the energy storage (22) is detected to be in a process of being recharged determining a compensated ambient temperature ($T_A$) dependent on at least the sensed ambient temperature ($T_S$) and dependent on information ($P_i$) related to a charging current for recharging the energy storage (22).

13. Computer program element for operating a portable electronic device, in particular according to claim 12, comprising computer program code means for implementing the following steps when executed on a processor of a portable electronic device: receiving a signal representing an ambient temperature ($T_S$) of the portable electronic device (2) sensed by a temperature sensor (1) of the portable electronic device, receiving a signal representing a temperature ($T_1$) of a rechargeable energy storage (22) of the portable electronic device (2) sensed by means of another temperature sensor (3), if the energy storage (22) is detected to be in a process of being recharged determining a compensated ambient temperature ($T_A$) dependent on at least the sensed ambient temperature ($T_S$) and dependent on the sensed energy storage temperature ($T_1$).

14. Portable electronic device, comprising a rechargeable energy storage (22) for operating the portable electronic device (2), a recharging detector (28) for detecting if the energy storage (22) is in a process of being recharged, a temperature sensor (1) for sensing an ambient temperature ($T_S$) of the portable electronic device (2), a compensator (231) for determining a compensated ambient temperature ($T_A$) dependent on at least the sensed ambient temperature ($T_S$) and information ($P_i$) related to a charging current for recharging the energy storage (22) if the energy storage (22) is detected to be in a process of being recharged.

15. Portable electronic device according to claim 14, comprising means for supplying one or more of a charging level and a charging voltage of the energy storage (22), wherein the compensator (231) is adapted to determine the charging current subject the charging level or the charging voltage respectively, and wherein the compensator (231) is adapted to determine the compensated ambient temperature ($T_A$) dependent on the determined charging current.

16. Portable electronic device according to claim 15, wherein the compensator (231) is adapted to determine the charging current by setting the charging current to a nominal charging current value if the charging level or the charging voltage respectively is less than a threshold, and / or by setting the charging current to a value less than the nominal charging current value if the charging level

EP 2 850 393 B1

or the charging voltage respectively is equal to or above the threshold.

17. Portable electronic device, in particular according to any of the preceding claims 14 to 16, comprising
a rechargeable energy storage (22) for operating the portable electronic device (2),
a recharging detector (28) for detecting if the energy storage (22) is in a process of being recharged,
a temperature sensor (1) for sensing an ambient temperature $(T_S)$ of the portable electronic device (2),
another temperature sensor (3) for sensing a temperature $(T_1)$ of the energy storage (22),
a compensator (231) for determining a compensated ambient temperature $(T_A)$ dependent on at least the sensed
ambient temperature $(T_S)$ and on the sensed energy storage temperature $(T_1)$.

18. Portable electronic device according to any one of the preceding claims 14 to 17,
wherein the compensator (231) comprises a model for determining a heat propagation as a function of time from
the energy storage (22) to the temperature sensor (1).


**Patentansprüche**

1. Verfahren zum Betrieb einer tragbaren elektronischen Vorrichtung, umfassend
eine Erfassung einer Umgebungstemperatur $(T_S)$ der tragbaren elektronischen Vorrichtung (2) mittels eines Temperatursensors (1),
eine Detektion ob sich ein wiederaufladbarer Energiespeicher (22) der tragbaren elektronischen Vorrichtung (2) in
einem Wiederaufladungsprozess befindet,
wenn detektiert wird, dass sich der Energiespeicher (22) im Wiederaufladungsprozess befindet, eine Bestimmung
einer kompensierten Umgebungstemperatur $(T_A)$ in Abhängigkeit von mindestens der erfassten Umgebungstemperatur $(T_S)$ und in Abhängigkeit von Informationen (Pi) über ein Ladestrom zum Laden des Energiespeichers (22).

2. Verfahren nach Anspruch 1,
wobei der Ladestrom basierend auf ein Ladeniveau und/oder eine Ladespannung des Energiespeichers (22) bestimmt wird, und
wobei die kompensierte Umgebungstemperatur $(T_A)$ in Abhängigkeit vom bestimmten Ladestrom bestimmt wird.

3. Verfahren nach Anspruch 2,
wobei der Ladestrom auf einen nominellen Ladestromwert gesetzt wird, wenn das Ladeniveau bzw. die Ladespannung kleiner als ein Schwellwert ist.

4. Verfahren nach Anspruch 2 oder Anspruch 3,
wobei der Ladestrom auf einen Wert gesetzt wird, der kleiner als der nominelle Ladestromwert ist, wenn das Ladeniveau bzw. die Ladespannung gleich wie oder grösser als ein Schwellwert ist.

5. Verfahren nach einem der vorangehenden Ansprüche 2 bis 4,
wobei der Ladestrom auf einen Wert gesetzt wird, der von einer Ladestrom-über-Ladeniveau-Eigenschaft bzw. von
einer Ladestrom-über-Ladespannung-Eigenschaft abgeleitet wird, wenn das Ladeniveau gleich wie oder grösser
als ein Schwellwert ist.

6. Verfahren nach einem der vorangehenden Ansprüche 3 bis 5,
wobei der nominelle Ladestromwert von einem Wiederaufladungsgerät empfangen wird, das mit der tragbaren
elektronischen Vorrichtung (2) während eines Wiederaufladungsprozesses verbunden ist.

7. Verfahren nach Anspruch 1,
wobei der Ladestrom gemessen wird, und
wobei die kompensierte Umgebungstemperatur $(T_A)$ in Abhängigkeit vom gemessenen Ladestrom bestimmt wird.

8. Verfahren nach einem der vorangehenden Ansprüche 2 bis 7,
wobei die Bestimmung oder die Messung des Ladestroms nur dann durchgeführt wird, wenn detektiert wird dass
sich der Energiespeicher (22) im Wiederaufladungsprozess befindet.

9. Verfahren zum Betrieb einer tragbaren elektronischen Vorrichtung, insbesondere nach einem der vorangehenden
Ansprüche, umfassend

eine Erfassung einer Umgebungstemperatur ($T_S$) der tragbaren elektronischen Vorrichtung (2) mittels eines Temperatursensors (1),

eine Erfassung einer Temperatur ($T_1$) eines wiederaufladbaren Energiespeichers (22) der tragbaren elektronischen Vorrichtung (22) mittels eines anderen Temperatursensors (3)

eine Detektion ob sich der wiederaufladbare Energiespeicher (22) in einem Wiederaufladungsprozess befindet, wenn detektiert wird, dass sich der Energiespeicher (22) im Wiederaufladungsprozess befindet, eine Bestimmung einer kompensierten Umgebungstemperatur ($T_A$) in Abhängigkeit von mindestens der erfassten Umgebungstemperatur ($T_S$) und in Abhängigkeit von der erfassten Temperatur des Energiespeichers (22).

10. Verfahren nach einem der vorangehenden Ansprüche,
wobei die kompensierte Umgebungstemperatur ($T_A$) die erfasste Umgebungstemperatur ($T_S$) darstellt, wertberichtigt durch einen Temperaturwert, der einen Einfluss von Wärme, die mindestens vom Energiespeicher (22) während des Wiederaufladungsprozesses freigesetzt wird und sich über einen Wärmeweg (HP) zum Temperatursensor (1) ausbreitet.

11. Verfahren nach einem der vorangehenden Ansprüche,
wobei Frequenzanteile der erfassten Umgebungstemperatur ($T_S$) mit einer Frequenz f>0 Hz in Abhängigkeit von der erfassten Umgebungstemperatur ($T_S$) eingestellt werden.

12. Computerprogrammelement zum Betrieb einer tragbaren elektronischen Vorrichtung, umfassend Computerprogrammmittel zur Implementierung der nachfolgenden Schritte wenn sie auf einem Prozessor einer tragbaren elektronischen Vorrichtung ausgeführt werden:

ein Empfang eines Signals, das eine Umgebungstemperatur ($T_S$) der tragbaren elektronischen Vorrichtung (2) darstellt und von einem Temperatursensor (1) der tragbaren elektronischen Vorrichtung erfasst wird,
ein Empfang von Informationen, ob sich ein wiederaufladbarer Energiespeicher (22) der tragbaren elektronischen Vorrichtung (2) in einem Wiederaufladungsprozess befindet,
wenn detektiert wird dass sich der Energiespeicher (22) im Wiederaufladungsprozess befindet, eine Bestimmung einer kompensierten Umgebungstemperatur ($T_A$) in Abhängigkeit von mindestens der erfassten Umgebungstemperatur ($T_S$) und in Abhängigkeit von Informationen (Pi) über ein Ladestrom zum Laden des Energiespeichers (22).

13. Computerprogrammelement zum Betrieb einer tragbaren elektronischen Vorrichtung, insbesondere nach Anspruch 12, umfassend Computerprogrammmittel zur Implementierung der nachfolgenden Schritte wenn sie auf einem Prozessor einer tragbaren elektronischen Vorrichtung ausgeführt werden:

ein Empfang eines Signals, das eine Umgebungstemperatur ($T_S$) der tragbaren elektronischen Vorrichtung (2) darstellt und von einem Temperatursensor (1) der tragbaren elektronischen Vorrichtung erfasst wird,
ein Empfang eines Signals, das eine Temperatur ($T_1$) eines wiederaufladbaren Energiespeichers (22) der tragbaren elektronischen Vorrichtung (2) darstellt und von einem anderen Temperatursensor (3) erfasst wird,
wenn detektiert wird, dass sich der Energiespeicher (22) im Wiederaufladungsprozess befindet, eine Bestimmung einer kompensierten Umgebungstemperatur ($T_A$) in Abhängigkeit von mindestens der erfassten Umgebungstemperatur ($T_S$) und in Abhängigkeit von der erfassten Temperatur ($T_1$) des Energiespeichers.

14. Tragbare elektronische Vorrichtung, umfassend
einen wiederaufladbaren Energiespeicher (22) zum Betrieb der tragbaren elektronischen Vorrichtung (2),
einen Wiederaufladedetektor (28) zum Detektieren ob sich der Energiespeicher (22) in einem Wiederaufladungsprozess befindet,
einen Temperatursensor (1) zum Erfassen einer Umgebungstemperatur ($T_S$) der tragbaren elektronischen Vorrichtung (2),
einen Kompensator (231) zum Bestimmen einer kompensierten Umgebungstemperatur ($T_A$) in Abhängigkeit von mindestens der erfassten Umgebungstemperatur ($T_S$) und in Abhängigkeit von Informationen (Pi) über ein Ladestrom zum Laden des Energiespeichers (22), wenn detektiert wird, dass sich der Energiespeicher (22) im Wiederaufladungsprozess befindet.

15. Tragbare elektronische Vorrichtung nach Anspruch 14,
umfassend Mittel zur Bereitstellung eines oder mehrerer von: einem Ladeniveau und einer Ladespannung des Energiespeichers (22),

wobei der Kompensator (231) derart ausgestaltet ist, dass er den Ladestrom in Abhängigkeit vom Ladeniveau bzw. von der Ladespannung detektiert, und

wobei der Kompensator (231) derart ausgestaltet ist, dass er die kompensierte Umgebungstemperatur ($T_A$) in Abhängigkeit vom bestimmten Ladestrom detektiert.

16. Tragbare elektronische Vorrichtung nach Anspruch 15,
wobei der Kompensator (231) derart ausgestaltet ist, dass er den Ladestrom derart detektiert, dass er den Ladestrom auf einen nominellen Ladestromwert setzt, wenn das Ladeniveau bzw. die Ladespannung kleiner als ein Schwellenwert ist, und/oder dass er den Ladestrom auf einen Wert setzt, der kleiner als der Wert des nominellen Ladestroms ist, wenn das Ladeniveau bzw. die Ladespannung gleich wie oder grösser als der Schwellenwert ist.

17. Tragbare elektronische Vorrichtung, insbesondere nach einem der vorangehenden Ansprüche 14 bis 16, umfassend
einen wiederaufladbaren Energiespeicher (22) zum Betrieb der tragbaren elektronischen Vorrichtung (2),
einen Detektor für Wiederaufladung (28) zum Detektieren ob sich der Energiespeicher (22) im Wiederaufladungsprozess befindet,
einen Temperatursensor (1) zum Erfassen einer Umgebungstemperatur ($T_S$) der tragbaren elektronischen Vorrichtung (2),
einen weiteren Temperatursensor (3) zum Erfassen einer Temperatur ($T_1$) des Energiespeichers (22),
einen Kompensator (231) zum Bestimmen einer kompensierten Umgebungstemperatur ($T_A$) in Abhängigkeit von mindestens der erfassten Umgebungstemperatur ($T_S$) und von der erfassten Temperatur (T1) des Energiespeichers.

18. Tragbare elektronische Vorrichtung nach einem der vorangehenden Ansprüche 14 bis 17,
wobei der Kompensator (231) ein Modell zum Bestimmen einer Wärmeausbreitung als Funktion der Zeit aus dem Energiespeicher (22) zum Temperatursensor (1) umfasst.

## Revendications

1. Procédé d'opération d'un dispositif électronique portable, comprenant
une détection d'une température ambiante ($T_S$) du dispositif électronique portable (2) à l'aide d'un capteur de température (1),
une détection si un dispositif de stockage d'énergie rechargeable (22) du dispositif électronique portable (2) se trouve dans le processus d'être rechargé,
s'il est détecté que le dispositif de stockage d'énergie (22) se trouve dans le processus d'être rechargé, une détermination d'une température ambiante compensée ($T_A$) dépendant d'au moins la température ambiante détectée ($T_S$) et dépendant des informations (Pi) sur un courant de charge pour recharger le dispositif de stockage d'énergie (22).

2. Procédé selon la revendication 1,
le courant de charge étant déterminé à la base d'un niveau de charge et/ou d'une tension de charge du dispositif de stockage d'énergie (22), et
la température ambiante compensée ($T_A$) étant déterminée dépendant du courant de charge déterminé.

3. Procédé selon la revendication 2,
le courant de charge étant réglé à une valeur nominale du courant de charge si le niveau de charge ou bien la tension de charge est inférieur à un seuil.

4. Procédé selon la revendication 2 ou la revendication 3,
le courant de charge étant réglé à une valeur inférieure à la valeur nominale du courant de charge si le niveau de charge ou bien la tension de charge est égale ou supérieur à un seuil.

5. Procédé selon l'une des revendications précédentes 2 à 4,
le courant de charge étant réglé à une valeur dérivée d'une caractéristique du courant de charge en fonction d'un niveau de charge ou bien d'une caractéristique du courant de charge en fonction d'une tension de charge si le niveau de charge est égale ou supérieur à un seuil.

6. Procédé selon l'une des revendications précédentes 3 à 5,
la valeur nominale du courant de charge étant reçue d'un rechargeur connecté au dispositif électronique portable (2) pendant un processus d'être rechargé.

7. Procédé selon la revendication 1,
   le courant de charge étant mesuré et
   la température ambiante compensée ($T_A$) étant déterminée dépendant du courant de charge mesuré.

8. Procédé selon l'une des revendications précédentes 2 à 7,
   la détermination ou la mesure du courant de charge étant seulement effectuée s'il est détecté que le dispositif de stockage d'énergie (22) se trouve dans un processus d'être rechargé.

9. Procédé d'opération d'un dispositif électronique portable, particulièrement selon l'une des revendications précédentes, comprenant
   une détection d'une température ambiante ($T_S$) du dispositif électronique portable (2) à l'aide d'un capteur de température (1),
   une détection d'une température ($T_1$) d'un dispositif de stockage d'énergie (22) du dispositif électronique portable (2) à l'aide d'un autre capteur de température (3),
   une détection si le dispositif de stockage d'énergie rechargeable (22) se trouve dans le processus d'être rechargé,
   s'il est détecté que le dispositif de stockage d'énergie (22) se trouve dans le processus d'être rechargé, une détermination d'une température ambiante compensée ($T_A$) dépendant d'au moins la température ambiante détectée ($T_S$) et dépendant de la température ($T_1$) détectée.

10. Procédé selon l'une des revendications précédentes,
    la température ambiante compensée ($T_A$) représentant la température ambiante déterminée ($T_S$) ajustée par une valeur de température représentant un impacte de chaleur évacuée au moins du dispositif de stockage d'énergie (22) pendant le processus d'être rechargé et propagé par un chemin de chaleur (HP) au capteur de température (1).

11. Procédé selon l'une des revendications précédentes,
    des contributions de fréquence de la température ambiante ($T_S$) détectée avec une fréquence f>0 Hz étant ajustées dépendant de la température ambiante ($T_S$) détectée.

12. Elément de logiciel d'ordinateur pour l'opération d'un dispositif électronique portable, comprenant des moyens de code de logiciel d'ordinateur pour implémenter les étapes suivantes quand exécutée sur un processeur d'un dispositif électronique portable:

    recevoir un signal représentant une température ambiante ($T_S$) du dispositif électronique portable (2) détectée par un capteur de température (1) du dispositif électronique portable (2),
    recevoir des informations si un dispositif de stockage d'énergie rechargeable (22) du dispositif électronique portable (2) se trouve dans le processus d'être rechargé,
    s'il est détecté que le dispositif de stockage d'énergie (22) se trouve dans le processus d'être rechargé, une détermination d'une température ambiante compensée ($T_A$) dépendant d'au moins la température ambiante détectée ($T_S$) et dépendant des informations (Pi) sur un courant de charge pour recharger le dispositif de stockage d'énergie (22).

13. Elément de logiciel d'ordinateur pour l'opération d'un dispositif électronique portable, particulièrement selon la revendication 12, comprenant des moyens de code de logiciel d'ordinateur pour implémenter les étapes suivantes quand exécutés sur un processeur d'un dispositif électronique portable:

    recevoir un signal représentant une température ambiante ($T_S$) du dispositif électronique portable (2) détectée par un capteur de température (1) du dispositif électronique portable (2),
    recevoir un signal représentant une température ($T_1$) d'un dispositif de stockage d'énergie rechargeable (22) du dispositif électronique portable (2) détecté à l'aide d'un autre capteur de température,
    s'il est détecté que le dispositif de stockage d'énergie (22) se trouve dans le processus d'être rechargé, une détermination d'une température ambiante compensée ($T_A$) dépendant d'au moins la température ambiante détectée ($T_S$) et dépendant de la température ($T_1$) détectée.

14. Dispositif électronique portable, comprenant
    un dispositif de stockage d'énergie rechargeable (22),
    un détecteur rechargeable (28) pour détecter si le dispositif de stockage d'énergie (22) se trouve dans le processus d'être rechargé,
un capteur de température (1) pour détecter une température ambiante (T_S) du dispositif électronique portable (2),
un compensateur (231) pour déterminer une température ambiante compensée (T_A) dépendant d'au moins la température ambiante détectée (T_S) et des informations (Pi) sur un courant de charge pour recharger le dispositif de stockage d'énergie (22) s'il est détecté que le dispositif de stockage d'énergie (22) se trouve dans le processus d'être rechargé.

15. Dispositif électronique portable selon la revendication 14, comprenant
des moyens pour alimenter un ou plusieurs de: un niveau de charge et une tension de charge du dispositif de stockage d'énergie (22),
le compensateur (231) étant adapté à déterminer le courant de charge basé sur le niveau de charge ou bien la tension de charge, et
le compensateur (231) étant adapté à déterminer la température ambiante compensée (T_A) dépendant du courant de charge déterminé.

16. Dispositif électronique portable selon la revendication 15,
le compensateur (231) étant adapté à déterminer le courant de charge en réglant une valeur nominale du courant de charge pour le courant de charge si le niveau de charge ou bien la tension de charge est inférieur à un seuil, et/ou en réglant une valeur du courant de charge inférieure à une valeur nominale du courant de charge pour si le niveau de charge ou bien la tension de charge est égale ou supérieur au seuil.

17. Dispositif électronique portable, particulièrement selon l'une des revendications précédentes 14 à 16, comprenant
un dispositif de stockage d'énergie (22) pour opérer le dispositif électronique portable (2),
un détecteur rechargeable (28) pour détecter si le dispositif de stockage d'énergie (22) se trouve dans le processus d'être rechargé,
un capteur de température (1) pour détecter une température ambiante (T_S) du dispositif de stockage d'énergie (22),
un autre capteur de température (3) pour détecter une température (T_1) du dispositif de stockage d'énergie (22),
un compensateur (231) pour déterminer une température ambiante compensée (T_A) dépendant d'au moins la température ambiante détectée (T_S) et de la température (T_1) détectée.

18. Dispositif électronique portable selon l'une des revendications précédentes 14 à 17,
le compensateur (231) comprend un modèle pour déterminer une propagation de chaleur en tant que fonction du temps du dispositif de stockage d'énergie (22) au capteur de température (1).

a)

b)

c)

FIG. 1

FIG. 2

FIG. 4

FIG. 3

**EP 2 850 393 B1**

## REFERENCES CITED IN THE DESCRIPTION

### Patent documents cited in the description

- EP 12004897 A
- US 5721837 A
- US 20110307208 A